# FASCICULE DE BREVET EUROPEEN

(11) **EP 1 245 327 B1**
(45) Date de publication et mention de la délivrance du brevet: **09.05.2007**
(21) Numéro de dépôt: 02290777.8
(22) Date de dépôt: 28.03.2002
(51) Int. Cl.: B23K 35/14, B22F 1/00

(54) **Poudre d'apport de brasage diffusion de pièce en alliage à base de nickel, cobalt ou fer**
Zusatzpulver zum Diffusionshartlöten von Werkstücken aus Nickel-, Kobalt- oder Eisenbasislegierungen
Filler powder for diffusion-brazing of nickel-, cobalt- or iron-based workpieces

(30) Priorité: 29.03.2001 FR 0104222
(43) Date de publication de la demande: 02.10.2002
(73) Titulaire: SNECMA SERVICES, 75015 Paris (FR)
(72) Inventeur: Etuve, Pascal, 86130 Dissay (FR); Jacquot, Frédéric, 86100 Chatellerault (FR); Malie, André, 86100 Chatellerault (FR); Michel, Christian, 86100 Chatellerault (FR)
(74) Mandataire: Nguyen, Dominique

(56) Documents cités:
- EP-A- 0 559 229
- EP-A- 0 974 418
- FR-A- 2 777 215
- US-A- 6 103 186
- PATENT ABSTRACTS OF JAPAN vol. 013, no. 485 (M-887), 6 novembre 1989 (1989-11-06) & JP 01 192497 A (SENJU METAL IND CO LTD), 2 août 1989 (1989-08-02)

## Description

La présente invention concerne une poudre d'apport de brasage diffusion pour des pièces en alliage à base de nickel, cobalt ou fer, de structure polycristalline ou monocristalline, notamment dans le domaine aéronautique. Elle concerne également une pièce d'apport compact obtenue à partir de ladite poudre.

Les conditions sévères de fonctionnement imposées par exemple aux aubes de turbomachines et de turbines industrielles exigeant notamment une excellente résistance à chaud à l'oxydation et/ou une excellente tenue en corrosion combinées à de bonnes propriétés mécaniques à hautes températures telle qu'une bonne tenue en fluage ont amené l'utilisation pour leur fabrication de superalliages à base de nickel, cobalt ou fer. Pour la réalisation d'assemblages ou de réparations par rechargement, les techniques courantes de soudage avec fusion se révèlent mal adaptées à ces matériaux ou demanderaient des mises en oeuvre complexes et souvent irréalisables.

Dans certaines applications et notamment pour la réparation de pièces dans le domaine aéronautique des apports sont en outre réalisés utilisant des alliages de type MCRALY comportant Cr, Al, Y, M désignant Ni, Co ou Fe.

Des procédés de brasage-diffusion ont alors été utilisés. En évitant de modifier profondément la structure métallurgique ) du matériau, ces procédés visent à obtenir des liaisons homogènes du point de vue chimique et aussi structural. Une illustration en est donnée par exemple par EP-A-0 075 497.

Il est connu pour réaliser des réparations par rechargement d'utiliser des poudres de brasage dites bicomposant et constituées d'un mélange de deux poudres obtenues notamment par atomisation sous argon :
· une poudre de superalliage de composition chimique voisine de celle du matériau à réparer;
· une poudre à base de nickel ou de cobalt contenant 2 à 6% en masse d'éléments fondants tels que le bore ou le silicium. L'opération de brasage-diffusion est réalisée à une température comprise entre 1050°C et 1220°C, déterminée inférieure à la température de fusion du superalliage. A la température de l'opération, la poudre de superalliage reste à l'état solide et la poudre contenant les éléments fondants devient liquide assurant à la fois la fluidité du mélange, le brasage des grains de poudre de superalliage entre eux amenant une densification et par diffusion des éléments fondants, une solidification isotherme du joint liquide est obtenue à la température de brasage. L'interdiffusion entre le joint brasé et le superalliage du métal de base assure l'homogénéisation des compositions chimiques. Après les traitements thermiques classiques, les zones rechargées par brasage-diffusion présentent les propriétés mécaniques à hautes températures recherchées, très proches de celles du matériau de base des pièces. En outre, les revêtements connus améliorant la tenue à la corrosion et à l'oxydation à haute température peuvent être appliqués.

Les procédés connus de brasage-diffusion utilisant des poudres bicomposant entraînent cependant certaines contraintes et des inconvénients de mise en oeuvre :
· l'opération de mélange des deux poudres est longue et fastidieuse,
· l'homogénéisation de la composition chimique du mélange est délicate et nécessite de nombreux contrôles mais reste impérative,
· des conditions particulières de stockage doivent être prévues pour éviter toute ségrégation du mélange,
· le ratio des proportions des deux poudres dans le mélange doit en outre être adapté en fonction de la nature du rechargement et, en particulier, de la largeur des fissures à réparer.

Un des buts de l'invention est d'obtenir une poudre d'apport ne présentant pas les inconvénients notés ci-dessus et utilisable notamment dans la mise en oeuvre des procédés de brasage-diffusion du type rappelé ci-dessus.

Une poudre d'apport de brasage diffusion de pièces en alliage A à base de nickel, cobalt ou fer selon la revendication 1 est remarquable selon l'invention en ce qu'elle est constituée de grains en un matériau d'alliage B déterminé présentant des propriétés fonctionnelles spécifiques adaptées à la zone de pièce d'application, lesdits grains étant de forme générale sphérique et portant en surface sous forme d'incrustations des ajouts dont la composition comporte au moins un élément fondant pris dans le groupe bore et silicium, ces ajouts incrustés étant en outre présents à l'état libre dans la poudre.

Une poudre pareille est déja décrite dans EP-A-974418.

Ladite poudre d'apport selon la revendication 1 peut notamment être soumise à un traitement thermique de frittage permettant d'obtenir une pièce d'apport compact suivant un cycle de traitement dans des conditions déterminées de vitesse de montée en température, de température et de durée de maintien conduisant à une microstructure présentant une répartition homogène de porosités fines, des phases d'eutectiques en faible nombre, de petite taille et sans amas et une dispersion fine de phases durcissantes à base d'élément(s) fondant(s).

D'autres caractéristiques et avantages de l'invention seront mieux compris à l'aide de la description qui va suivre d'exemples de réalisation en référence aux dessins annexés sur lesquels :
· la figure 1 représente une microphotographie à grandissement 3500 obtenue sous microscope électronique à balayage d'un échantillon de poudre d'apport de brasage diffusion conforme à l'invention,
· la figure 2 représente une microphotographie montrant un exemple de microstructure de pièce d'apport compact obtenue à partir de la poudre d'apport conforme à l'invention.

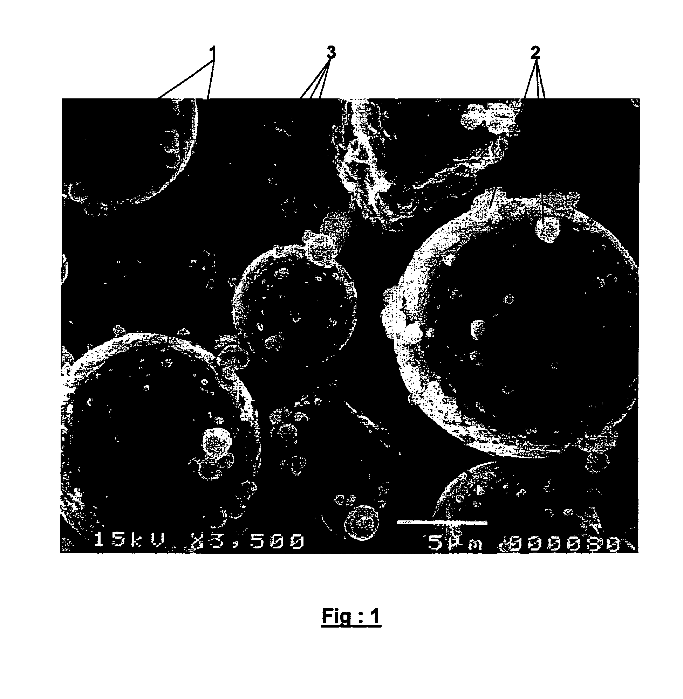

La constitution d'une poudre d'apport de brasage conforme à l'invention apparaît sur la microphotographie représentée par la figure 1. Les grains 1 sont composés d'un alliage A par exemple à base de nickel. Les ajouts 2 incrustés sur la surface des grains 1 sont composés d'un alliage à base d'au moins un élément fondant tel que bore ou silicium. Les grains 3 de petite taille à l'état libre entre les grains 1 d'alliage sont également formés dudit alliage d'élément(s) fondant(s).

La poudre ainsi constituée est obtenue au moyen d'une technique connue en soi de mécanosynthèse en plaçant un mélange de poudres d'une part d'alliage B et d'autre part d'alliage d'élément(s) fondant(s) à l'intérieur d'un conteneur dans un broyeur à billes de tout type connu, planétaire, horizontal ou vibratoire.

La poudre d'apport ainsi obtenue peut être utilisée dans la mise en oeuvre de tout procédé de brasage-diffusion appliqué lors de la fabrication ou la réparation de pièces en alliage à base de nickel, de cobalt ou de fer, notamment dans le domaine aéronautique. Il peut s'agir d'un assemblage de pièces, d'un rebouchage de crique ou fissure sur pièce ou d'un rechargement de surface de pièce en vue de restaurer les dimensions géométriques de la pièce.

Suivant les applications, la mise en place de la poudre d'apport peut être effectuée sous différentes formes. Ainsi, la poudre peut être utilisée directement avec ajout d'un additif, notamment un produit liant de type connu. La poudre peut également être utilisée après une élaboration sous forme de ruban.

De manière remarquable, conforme à l'invention, dans certaines applications et notamment dans le cas de rechargement de surfaces de pièce, un apport peut être effectué sous forme d'une pièce d'apport compact.

Ladite pièce d'apport compact est obtenue à partir de la poudre par la mise en oeuvre de techniques de fabrication connues en soi, notamment au moyen d'un cycle thermique assurant une compaction par frittage.

Notamment, une pièce d'apport compact peut être obtenue par maintien à température entre 1160°C et 1200°C durant 5 minutes à une heure. La pièce obtenue montre un taux de porosité inférieur à 4 %.

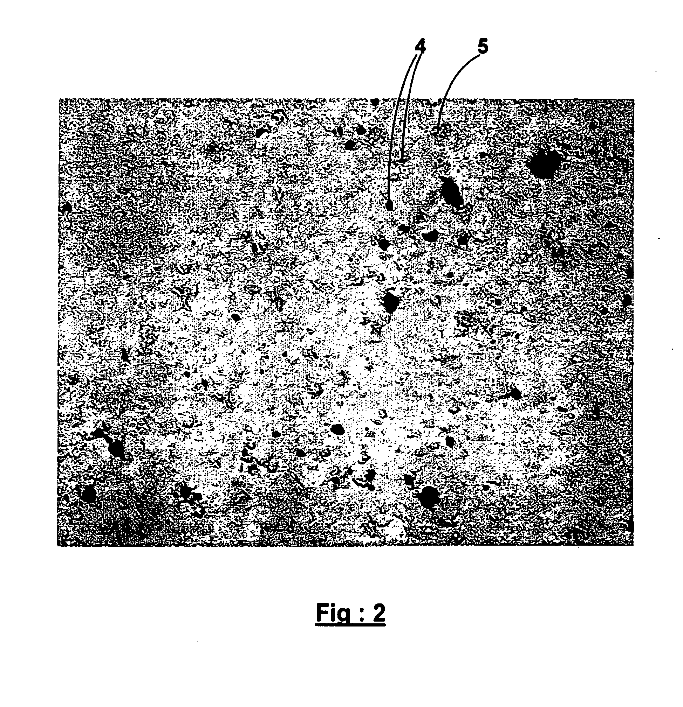

La figure 2 montre un exemple du résultat obtenu. Ce résultat est remarquable par la microstructure qui présente notamment une répartition homogène de porosités fines 4 et des phases durcissantes 5 à base d'élément fondant, notamment des borures ou des siliciures, sous forme d'une dispersion fine et en quantité contrôlée. On note en outre et de manière remarquable l'absence de phase eutectique.

Toutes les utilisations de la poudre d'apport conforme à l'invention, soit en assemblage, soit en réparation ou en rechargement et quelle que soit la forme d'application, directe avec ajout de liant ou après une élaboration intermédiaire, sous forme de ruban ou de pièce d'apport compact ont montré une nette amélioration de la tenue en service des pièces en alliage à base de nickel, cobalt ou fer.

Les microstructures observées dans les zones d'apport ou de liaison par brasage-diffusion sur les pièces montrent des caractéristiques remarquables obtenues à partir de la poudre d'apport conforme à l'invention.

On constate notamment la faible présence de porosités et lorsqu'elles subsistent, elles sont de petite taille, de répartition homogène et sans amas. Il en résulte une bonne tenue des pièces en résistance à la fatigue par élimination ou diminution des sites d'amorçage de rupture.

De même, la présence réduite de phases eutectiques qui sont de petites tailles et sans amas améliore la tenue à haute température des pièces.

En outre, une distribution homogène et de fine taille des phases durcissantes à base d'élément(s) fondants telles que borures ou siliciures induit un blocage du mouvement des dislocations et une résistance améliorée par retardement de l'apparition de fissures.

Toutes ces conditions favorisent une résistance des pièces à la dégradation dans un environnement sévère, notamment pour des utilisations aéronautiques, aux hautes températures et dans des conditions d'oxydation/corrosion et lorsque des caractéristiques de sollicitations mécaniques élevées sont en outre recherchées.

## Revendications

1. Poudre d'apport de brasage-diffusion de pièce en alliage. A à base de nickel, cobalt ou fer, **caractérisée en ce qu**'elle est constituée de grains en un matériau d'alliage B de type M Cr Al Y, M désignant Ni, Co ou Fe, lesdits grains étant de forme générale sphérique et portant en surface sous forme d'incrustations des ajouts dont la composition comporte au moins un élément fondant pris dans le groupe bore et silicium, ces ajouts incrustés étant en outre présents à l'état libre dans la poudre.

2. Pièce d'apport compact pour pièce de superalliage A à base de nickel, cobalt ou fer obtenue par traitement thermique de frittage d'une poudre d'apport conforme à la revendication, 1, **caractérisée en ce qu**'elle comporte une microstructure présentant une répartition homogène de porosités fines (4) et une dispersion fine de phases durcissantes (5) à base d'élément(s) fondant(s) dé type borures ou siliciures et ne présentant pas de phase eutectique.

## Claims

1. Diffusion-brazing filler powder for parts made of an alloy A based on nickel, cobalt or iron **characterized in that** it consists of particles of an alloy material B of the MCrAlY type, M denoting Ni, Co or Fe, said particles being of spherical overall shape and carrying, on the surface, in the form of incrustations, add-ons whose composition contains at least one fluxing element taken from the group: boron and silicon, these encrusted add-ons being furthermore present in the free state in the powder.

2. Compact fill-in for a part made of a superalloy A based on nickel, cobalt or iron, obtained by the sintering heat treatment of a filler according to Claim 1, **characterized in that** it comprises a microstructure having a homogeneous distribution of fine pores (4) and a fine dispersion of hardening phases (5) based on one or more fluxing elements of the boride or silicide type and not having a eutectic phase.

## Patentansprüche

1. Zusatzpulver zum Diffusionshartlöten von Werkstücken aus Legierungen A auf Nickel-, Kobalt- oder Eisenbasis,
**dadurch gekennzeichnet,**
**dass** es aus Körnern aus einem Legierungswerkstoff B des Typs M Cr Al Y gebildet wird, wobei mit M Ni, Co oder Fe bezeichnet wird, wobei diese Körner allgemein kugelförmig sind und an der Oberfläche in Form von Ablagerungen Zusätze tragen, deren Zusammensetzung mindestens ein Schmelzzusatzelement aus der Gruppe des Bor und Silizium enthält, wobei diese abgelagerten Zusätze in dem Pulver ferner als freie Zusätze vorhanden sind.

2. Kompaktes Werkstück für Werkstücke aus Superlegierungen A auf Nickel-, Kobalt- oder Eisenbasis, das in einer Wärmebehandlung durch Sintern eines Zusatzpulvers nach Anspruch 1 hergestellt wird,
**dadurch gekennzeichnet,**
**dass** es eine Mikrostruktur mit homogener Verteilung feiner Poren (4) und mit feiner Verteilung von Härtephasen (5) auf Basis eines oder mehrerer Schmelzzusatzelemente des Typs Bor oder Siliziumverbindungen aufweist und keine eutektische Phase beinhaltet.
